Europäisches Patentamt

**European Patent Office**

**Office européen des brevets**

(11) Veröffentlichungsnummer: **0 090 930**

**A1**

(12) # EUROPÄISCHE PATENTANMELDUNG

(21) Anmeldenummer: **83101497.2**

(22) Anmeldetag: **17.02.83**

(51) Int. Cl.³: **A 01 D 89/00**

(30) Priorität: **01.04.82 DE 3212123**

(43) Veröffentlichungstag der Anmeldung:
**12.10.83 Patentblatt 83.41**

(84) Benannte Vertragsstaaten:
**AT CH FR IT LI NL**

(71) Anmelder: **Firma Heinrich Wilhelm Dreyer**
**Diademstrasse**
**D-4515 Bad Essen 1-Wittlage(DE)**

(72) Erfinder: **Diedrich, Fritz**
**Obernfelde 21**
**D-4515 Bad Essen 1(DE)**

(74) Vertreter: **Busse & Busse Patentanwälte**
**Postfach 1226 Grosshandelsring 6**
**D-4500 Osnabrück(DE)**

(54) **Aufnahmetrommel für gemähtes halm- oder blattartiges Erntegut.**

(57) Es handelt sich um eine Aufnahmetrommel für gemähtes halm- oder blattartiges Erntegut (Pick up-Trommel). Um ein Wickeln oder Verstopfen des Forderguts innerhalb der Trommel und dadurch bedingte Betriebsstörungen oder Beschädigungen auszuschließen, ist eine Gestaltung der Trommel vorgesehen, bei der etwa in die Führungsschlitze (10) der Abstreif- bzw. Überleitbleche (8, 8') von oben eingedrungenes und/oder eingezogenes Gut (Pfeil X) frei nach unten durchfallen und auch im Bereich vor und hinter den Überleitblechen von den Zinken (6) kein Fördergut in den eigentlichen Innenraum der Trommel mehr eingezogen werden kann.

Fig 4

EP 0 090 930 A1

- 1 -

Aufnahmetrommel für gemähtes halm- oder blattartiges
Erntegut

Die Erfindung betrifft eine Aufnahmetrommel für gemähtes
halm- oder blattartiges Erntegut der im Oberbegriff des
Patentanspruchs 1 angegebenen Art.

Bei bekannten Aufnahmetrommeln dieser Art (z.B. DE-PS 20 06 923, DE-GM 80 28 347) weist die Trommel-Tragkonstruktion mit dem Tragrohr einen Querrahmen auf, an dem die sich geradlinig nach hinten erstreckenden Enden der den Trommelmantel bildenden Blechstreifen befestigt und mit vertikalem Abstand gegeneinander abgesteift sind. Innerhalb des von dem Rahmen bestimmten vertikalen Abstandes der hinteren Enden der Blechstreifen sind die konzentrisch zur Antriebswelle gekrümmten Stützbleche des hinteren Bereichs der Trommel angebracht.Damit ergibt sich im hinteren Bereich der Aufnahmetrommel unterhalb der Abstreif- bzw. Überleitbleche ein zwischen dem Rahmen und den Stützblechen befindlicher, auch unterseitig bis auf die Schlitze für die Zinken geschlossener Trommelhohlraum für die sich zurückziehenden Zinken.

- 2 -

Derartige Aufnahmetrommeln werden häufig - insbesondere wenn sie an landwirtschaftlichen Ladewagen angebaut sind - durch weitere Förderorgane, die das Fördergut von der Trommel abnehmen und in das Innere des Ladewagens befördern, stark von oben beansprucht, und zwar besonders in dem von den Abstreif- bzw. Überleitblechen gebildeten oberen Bereich, in dem das andere Förderorgan den Weitertransport des Fördergutes übernimmt und aus dem sich die Zinken in den erwähnten Trommelhohlraum zurückziehen. Diese Beanspruchungen führen dazu, daß in diesem oberen Zinkeneinzugs- und Gutübergabebereich das Fördergut durch die Führungsschlitze zwischen den Abstreif- bzw. Überleitblechen gedrückt und/oder eingezogen wird und so in den hinteren Trommelhohlraum gelangt, wo es zu Verstopfungen kommt. Dabei besteht die Gefahr, daß das Gut von den Zinken auch durch die Schlitze der gekrümmten Stützbleche zur Trommelwelle hin eingezogen wird, wo es wickelt und stopft, was zum Stillstand der Aufnahmetrommel und zu Brüchen führen kann.

Aufgabe der Erfindung ist es, eine Aufnahmetrommel der eingangs angegebenen Art so auszugestalten, daß die Gefahr des Wickelns oder Verstopfens von Fördergut innerhalb der Trommel beseitigt wird und dadurch hervorgerufene Betriebsstörungen oder Beschädigungen der Aufnahmetrommel ausgeschlossen werden.

Hierzu zeichnet sich die erfindungsgemäße Aufnahmetrommel aus durch die im kennzeichnenden Teil des Patentanspruchs 1 angegebenen Merkmale. Weitere Einzelheiten der Erfindung und vorteilhafte Ausgestaltungen sind in den Ansprüchen 2 bis 4 angegeben.

Die erfindungsgemäße Aufnahmetrommel ermöglicht es, daß etwa in die Führungsschlitze der Abstreif- bzw. Überleitbleche von oben eingedrungenes und/oder eingezogenes Gut frei nach unten durchfallen kann, da es im Bereich unterhalb des Zinken-Einzugsgebietes keine horizontal angeordneten Bauelemente mehr gibt. Außerdem wird erreicht, daß auch im Bereich vor und hinter den Überleitblechen von den Zinken kein Fördergut in den eigentlichen Innenraum der Trommel mehr eingezogen werden kann. Insgesamt schafft die Erfindung damit eine Aufnahmetrommel, bei der Störungen als Folge von Verstopfungen der Trommel nicht mehr auftreten.

Der Gegenstand der Erfindung wird nachstehend anhand eines in der Zeichnung dargestellten Ausführungsbeispiels näher erläutert; in der Zeichnung zeigen:

Fig. 1 u. Fig. 2    zwei Einbaubeispiele für mit weiteren Förderorganen zusammenwirkende Aufnahmetrommeln in schematischer Seitenansicht, wobei der jeweils besonders beanspruchte Bereich der Aufnahmetrommel durch einen Pfeil X kenntlich gemacht ist;

Fig. 3    eine Draufsicht auf eine erfindungsgemäße Aufnahmetrommel, teilweise aufgebrochen;

Fig. 4    einen Querschnitt nach Linie IV-IV in Fig. 3;

Fig. 5    eine Teilansicht der erfindungsgemäßen Trommel von hinten, etwa gemäß Ansicht V-V in Fig. 3.

Die in üblicher Weise als sog. offene Trommel ausgebildete Aufnahmetrommel besitzt eine zentrale Antriebswelle 1, die sich über die Aufnahmebreite bzw. Länge der Trommel erstreckt und in deren Seitenwandungen 2,3 drehbar gelagert ist. Die zentrale Antriebswelle 1 wird in üblicher Weise an einer Seite von außen angetrieben. Auf der Welle 1 sind endseitig Lagerscheiben 4 und 4' angebracht, die sich mit der Welle 1 drehen und in denen Zinkenträger 5 drehbar gelagert sind. Die Zinkenträger 5, die üblicherweise als Winkeleisen ausgeführt sind und Federzinken 6 tragen, sind in den endseitigen Lagerscheiben 4,4' rotationssymmetrisch auf einem Kreis um die Welle 1 angeordnet und erstrecken sich zwischen den beiden endseitigen Lagerscheiben 4,4' über die Arbeitsbreite bzw. Länge der Aufnahmetrommel.

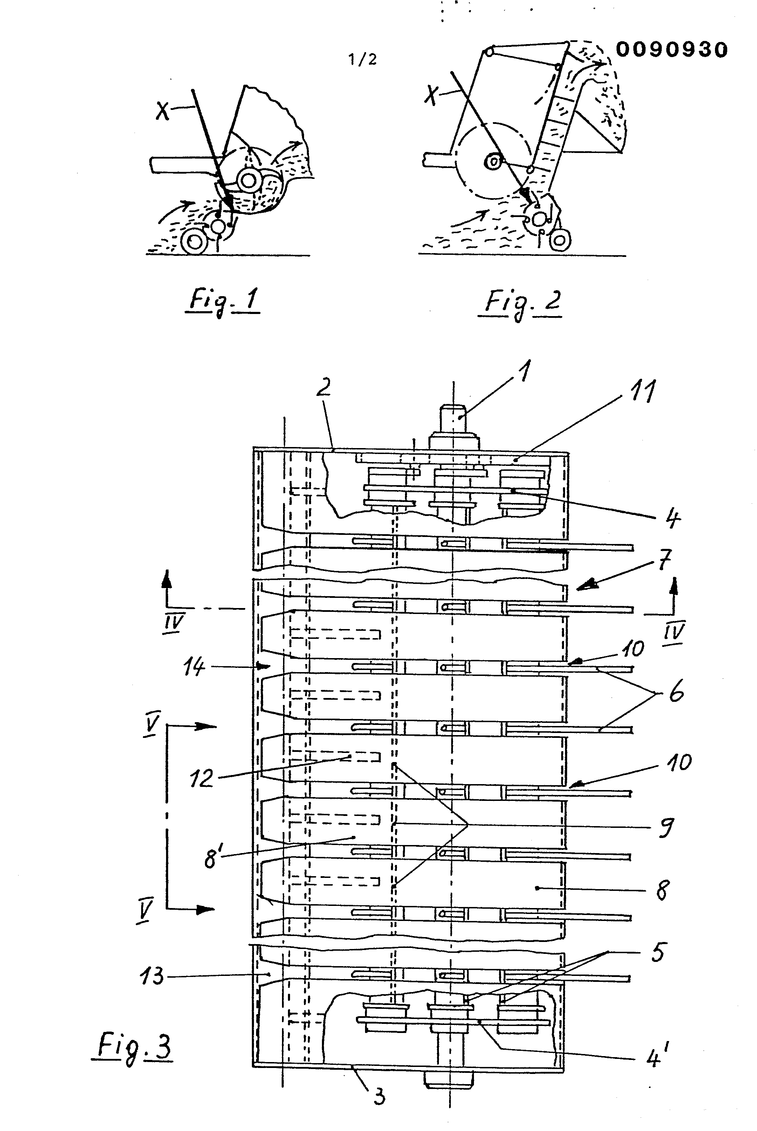

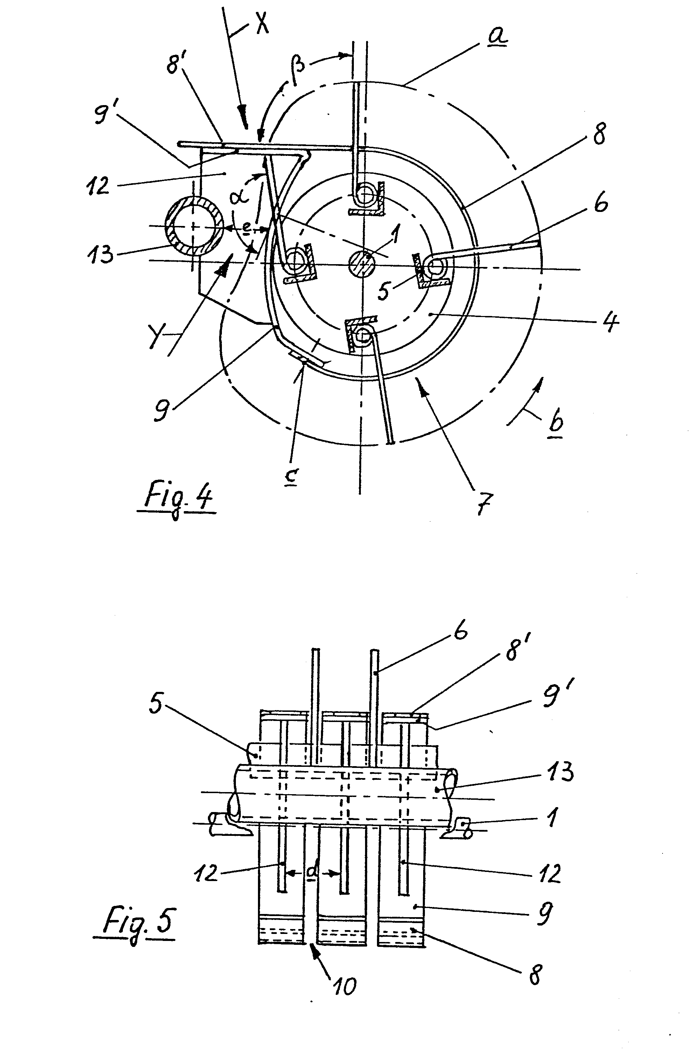

Der von den Zinkenträgern 5 gebildete Rotationskörper ist von einem Trommelmantel 7 umgeben, der von einzelnen, im Abstand nebeneinander angebrachten, zweckmäßig aus Federstahl bestehenden Blechstreifen 8,9 gebildet ist, wie unten noch näher erläutert wird. In den zwischen den einzelnen Blechstreifen 8,9 gebildeten Voll- bzw. Führungsschlitzen 10 des Trommelmantels 7 bewegen sich die an den Zinkenträgern 5 befestigten Federzinken 6, und zwar so, daß sie bei ihrer Umlaufbewegung bereichsweise aus den Schlitzen 10 ganz nach außen austreten bzw. vorstehen, während sie in einem anderen, hinteren Bereich sich in die Schlitze 10 zurückziehen (vgl. die in Fig. 4 strichpunktiert angedeutete Umlaufbahn a der Zinkenspitzen bei ihrer Bewegung in Drehrichtung b). Diese gesteuerte Eigendrehbewegung der die Federzinken 6 halternden Zinkenträger 5 bei ihrem jeweiligen Umlauf wird über Steuerelemente erreicht, welche an einer Seite der Aufnahmetrommel vorgesehen sind und mit den dort befindlichen Enden der Zinkenträger 5 zusammenwirken. Zur Steuerung der Zinkenträger 5 kann z.B. in bekannter Weise eine an der Innenseite der Seitenwandung 2 an der Antriebsseite der Trommel vorgesehene, geschlossene Steuerkurvenbahn 11 vorgesehen sein (vgl. Fig. 3), in der eine jedem Zinkenträger 5 zugeordnete und mit diesem über einen Verbindungsarm gekoppelte Steuerrolle, die in der geschlossenen Steuerkurvenbahn 11 zwangsgeführt ist, läuft (vgl. z.B. DE-GM 80 28 347).

Der Trommelmantel 7 wird, wie schon gesagt, im wesentlichen von Blechstreifen 8,9 mit den jeweils dazwischen befindlichen Voll- bzw. Führungsschlitzen 10 für die Zinken 6 gebildet. Dabei wird der untere, vordere und obere Bereich des Trommelmantels 7 von konzentrisch zur Antriebswelle 1 und zu den Lagerscheiben 4,4' gekrümmten Blechstreifen 8 gebildet, die auch als Abstreifbleche bezeichnet werden. Im oberen Bereich der Trommel enden die Abstreifbleche 8 in tangential sich nach hinten erstreckenden Überleitblechen 8'. Der hintere Bereich des Trommelmantels 7 wird von Blechstreifen 9 gebildet, welche den verbleibenden rückseitigen Zwischenraum zwischen den im unteren Bereich des Trommelmantels 7 etwa bei c (Fig. 4) endenden Abstreifblechen 8 und den im oberen Bereich des Trommelmantels in die Überleitbleche 8' auslaufenden Enden der Abstreifbleche 8 überbrücken und formstabil gegeneinander abstützen, weshalb diese Blechstreifen 9 auch als Stützbleche bezeichnet werden. Die Stützbleche 9 sind ebenfalls um die Antriebswelle 1 bzw. die Lagerscheiben 4,4' gekrümmt, haben aber nicht unbedingt eine hierzu durchgehend konzentrische Krümmung, sondern vorteilhaft einen zumindest bereichsweise hiervon abweichenden Krümmungsverlauf, wie dies auch aus Fig. 4 ersichtlich ist und weiter unten noch erläutert wird. Zweckmäßig sind die Stützbleche 9 mit ihren oberen Enden 9' entgegen ihrer Krümmungsrichtung nach hinten abgebogen und an der Unterseite der Überleitbleche 8' befestigt. Auf diese Weise sind die Überleitbleche 8' stabilisiert. Der so gebildete Trommelmantel 7 wird seinerseits abgestützt und getragen von in vertikaler Ebene ausgerichteten Tragblechen 12, die ihrerseits jeweils mittig an der Unterseite der Überleitbleche 8' (oder der die Überleitbleche unterseitig abstützenden oberen Enden 9' der Stützbleche 9) sowie an der Rückseite der Stützbleche 9 befestigt sind. Wie insbesondere aus Fig. 5 ersichtlich, ist der Abstand d zwischen zwei benachbarten Tragblechen 12 in jedem Fall erheblich größer als die Breite der Schlitze 10 für die Zinken 6. Die Tragbleche 12 sind an ihrer Rückseite an einem zweckmäßig als Tragrohr 13 ausgeführten Träger befestigt. Das Tragrohr 13 erstreckt sich horizontal und damit parallel zur Trommel, ist jedoch, wie aus Fig. 4 u. 5 ersichtlich, oberhalb der Trommelmitte angeordnet.

Das Tragrohr 13 mit den daran in vertikaler Ausrichtung befestigten Tragblechen 12 bildet die Trommel-Tragkonstruktion, wobei die Größe der Tragbleche 12 und damit der Abstand $e$ zwischen dem Tragrohr 13 und den Rückseiten der Stützbleche 9 in jedem Fall so bemessen ist, daß nicht nur die Spitzen der Zinken 6 auf ihrer strichpunktierten Umlaufbahn $a$ am Tragrohr 13 mit Abstand vorbeistreichen, sondern überdies zwischen den Stützblechen 9 und dem Tragrohr 13 ein relativ großer, nach unten offener Freiraum Y ausgebildet ist, in welchem Fördergut, das in dem von einem weiteren Förderorgan belasteten Bereich X der Überleitbleche 8' durch die Schlitze 10 gelangt, ohne Behinderung durch horizontale Bauteile frei nach unten durchfallen kann und somit nicht in das eigentliche Trommelinnere gelangt.

Weiterhin ist vorteilhaft die Steuerung der Zinkenträger 5 und damit der Zinken 6 so ausgelegt, daß im Zinken-Einzugsgebiet der jeweils in Drehrichtung $b$ gebildete Winkel $\beta$ zwischen den Zinken 6 und den Abstreif- bzw. Überleitblechen 8,8' mindestens 90° beträgt. Hierdurch wird verhindert, daß von den Zinken Fördergut in das Innere des Trommelmantels 7 durch die Schlitze 10 gedrückt wird.

Ferner sind vorteilhaft, wie ebenfalls aus Fig. 4 ersichtlich, der Krümmungsverlauf der Stützbleche 9 und die Steuerung der Zinken 6 so aufeinander abgestimmt, daß der Winkel $\alpha$ zwischen den Zinken und einer an das Stützblech 9 jeweils angelegten Tangente stets größer als 90° ist, zweckmäßig etwa 120° beträgt. Auf diese Weise wird nicht nur verhindert, daß Gut, das durch die Schlitze 10 im Bereich der Überleitbleche 8' durchgedrückt und/oder durchgezogen wurde, durch die sich weiter in das Trommelinnere einziehenden Zinken von der Rückseite der Stützbleche 9 durch die dortigen Schlitze 10 in das Innere der Trommel gelangt, sondern auch ein Aufschub von Gut von den Stützblechen 9 weg und damit das Durchfallen durch den Freiraum Y unterstützt wird.

Es ist daher auch möglich, die Führungsschlitze 10 im Bereich der Überleitbleche 8' in Förderrichtung zu erweitern, wie in Fig. 3 bei 14 angedeutet, um so ein Festsetzen oder Anhäufen von Fördergut in den Schlitzen der Überleitbleche 8' infolge eines vom dort wirksam weiteren Förderorgan ausgeübten Druckes zu verhindern.

0090930

Patentansprüche:

1.     Aufnahmetrommel für gemähtes halm- oder blattartiges Erntegut, bestehend im wesentlichen aus einer zentralen Antriebswelle mit endseitigen Lagerscheiben für sich zwischen diesen erstreckende und auf einem Kreis um die Welle umlaufende, gesteuerte Zinkenträger mit daran befestigten Federzinken sowie aus einem hauptsächlich aus einzelnen Blechstreifen gebildeten Trommelmantel, in dessen Vollschlitzen sich die Zinken, bereichsweise aus diesen austretend und in diese wieder zurückziehend, bewegen, wobei die zumindest im vorderen Bereich der Trommel konzentrisch zur Antriebswelle gekrümmten Abstreifbleche im oberen Bereich der Trommel in tangential sich nach hinten erstreckenden Überleitblechen enden und wobei der hintere Bereich der Trommel ebenfalls gekrümmte Stützbleche aufweist und an einer Trommel-Tragkonstruktion, die ein parallel zur Antriebswelle sich erstreckendes und oberhalb der Trommelmitte angeordnetes Tragrohr umfaßt, abgestützt ist, dadurch gekennzeichnet, daß die Abstreifbleche (8) im unteren Bereich des Trommelmantels (7) enden und der sich  anschließende hintere Mantelteil der Trommel von den Stützblechen (9) gebildet ist, daß die Trommel-Tragkonstruktion außer aus dem Tragrohr (13) aus einer Mehrzahl von quer daran in vertikaler Ausrichtung befestigten Tragblechen (12) besteht, die ihrerseits jeweils mittig an der Unterseite der Überleitbleche (8') und an der Rückseite der Stützbleche (9) befestigt sind, wodurch im hinteren Bereich der Trommel unterhalb des Einzugsgebiets der Zinken (6) ein nach unten offener Freiraum (Y) für ungehinderten Gutdurchtritt gebildet ist.

2.     Aufnahmetrommel nach Anspruch 1, dadurch gekennzeichnet, daß die Zinken (6) so gesteuert sind, daß im Zinken-Einzugsgebiet der Trommel der jeweils in Drehrichtung zwischen den Zinken und den Abstreifblechen (8) gebildete Winkel ($\beta$) mindestens 90° beträgt.

3.      Aufnahmetrommel nach Anspruch 1 oder 2, dadurch gekennzeichnet, daß der Krümmungsverlauf der Stützbleche (9)
und die Steuerung der Zinken (6) so aufeinander abgestimmt
sind, daß der Winkel ($\alpha$) zwischen den Zinken und einer an
das jeweilige Stützblech angelegten Tangente stets größer
als 90° ist.

4.      Aufnahmetrommel nach einem der Ansprüche 1 bis 3,
dadurch gekennzeichnet, daß die Stützbleche (9) mit ihren
oberen Enden (9') entgegen ihrer Krümmung nach hinten abgebogen und an den Unterseiten der Überleitbleche (8') befestigt sind.

0090930

Fig. 1

Fig. 2

Fig. 3

_Fig. 4_

_Fig. 5_

# EUROPÄISCHER RECHERCHENBERICHT

**0090930**
Nummer der Anmeldung

EP 83 10 1497

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A-1 159 595 (M. MESSNER) <br> * Seite 3, linke Spalte, Zeile 34 - rechte Spalte, Zeile 15; Figur 9 * | 1,2 | A 01 D 89/00 |
| A | DE-B-1 006 194 (GEBR. CLAAS) <br> * Spalte 1, Zeile 25 - Spalte 2, Zeile 20; Figur 2 * | 1 | |
| A | DE-U-1 938 358 (GEBR. WELGER) <br> * Seite 2, Zeilen 27-29; Figuren 1, 2 * | 1,4 | |

**RECHERCHIERTE SACHGEBIETE (Int Cl 3)**

A 01 D 87/00
A 01 D 89/00

Der vorliegende Recherchenbericht wurde für alle Patentansprüche erstellt.

| Recherchenort | Abschlußdatum der Recherche | Prüfer |
|---|---|---|
| BERLIN | 16-06-1983 | BERGZOLL M C |